# EUROPEAN PATENT APPLICATION

(11) **EP 2 863 669 A1**
(43) Date of publication of application: **22.04.2015**
(21) Application number: 13306434.5
(22) Date of filing: 18.10.2013
(51) Int. Cl.: H04W 12/06, H04L 29/06, H04W 88/06

(54) **Method for authenticating a device to a short range radio-frequency communication network and corresponding device and server**

(71) Applicant: Gemalto SA, 92190 Meudon (FR)
(72) Inventor: Chene, Gilles, 13705 La Ciotat (FR); Baudouin, Julien, 13705 La Ciotat (FR); Guichard, Olivier, 13705 La Ciotat (FR)

(57) **Abstract**

The invention relates to a method for authenticating a device to a short range radio-frequency communication network, said second network. The second network includes at least one access point.

According to the invention, a device is connected to a long range radio-frequency communication network, said first network. The device accesses at least one authentication process relating to the second network. A first server is accessible from the first network. The method comprises the following steps. The first server sends to the device a first message 26 comprising at least one identifier relating to a predetermined authentication process relating to the second network. The device selects, based upon the at least one identifier relating to a predetermined authentication process relating to the second network, one authentication process relating to the second network. And the device sends to at least one selected access point a second message 214 including a request for launching an authentication procedure by using the selected authentication process relating to the second network.

The invention also pertains to corresponding device and server.

## Description

### Field of the invention:

The invention relates, in a general manner, to a method for authenticating a first device to a short range radio-frequency communication network.

Furthermore, the invention also pertains to a device for authenticating to a short range radio-frequency communication network.

Finally, the invention relates to a server for authenticating a device to a short range radio-frequency communication network as well.

### State of the art:

US 2013/0007853 A1 discloses a solution for switching from a mobile radio network, as first network, to a Short Range (or SR) radio network, as second network while forcing a mobile device to use an Extensible Authentication Protocol (or EAP) based authentication mechanism. The mobile device authenticates to a wireless Access Point (or AP) while selecting the authentication mechanism.

Such a known network authenticating solution allows offloading automatically the first network and connecting to the second network, so that the mobile device is able to further communicate.

However, such a known network authenticating solution is based upon a use of the authentication mechanism that is selected by the mobile device.

Thus, there is a need to access from a mobile device to a wireless AP notably in a dynamic and flexible manner.

### Summary of the invention:

The invention proposes a solution for satisfying the just hereinabove specified need by providing a method for authenticating a device to a short range radio-frequency communication network, said second network. The second network includes at least one access point.

According to the invention, a device is connected to a long range radio-frequency communication network, said first network. The device accesses at least one authentication process relating to the second network. A first server is accessible from the first network. The method comprises the following steps. The first server sends to the device a first message comprising at least one identifier relating to a predetermined authentication process relating to the second network. The device selects, based upon the at least one identifier relating to a predetermined authentication process relating to the second network, one authentication process relating to the second network. And the device sends to at least one selected access point a second message including a request for launching an authentication procedure by using the selected authentication process relating to the second network.

The principle of the invention consists in that a server that is accessed through a Long Range (or LR) Radio-Frequency (or RF) network provides a connected device with an identifier relating to an authentication mechanism. The authentication mechanism identifier is previously loaded within the server and the (client) device. Once the device receives the authentication mechanism identifier, the device is able to trigger the identified mechanism for authenticating to a chosen AP relating to an SR RF network, as second network.

The server accessible through the first network is thus at the root of a transmission of the authentication mechanism identifier to a device that is connected to the first network.

The authentication mechanism identifier is predefined at the server side and therefore flexible. The authentication mechanism identifier may be defined by a server operator, like a Mobile Network Operator (or MNO), a Mobile Virtual Network Operator (or MVNO), a service provider or on its behalf, according to rules that this latter has previously chosen.

Thanks to a selection of the authentication mechanism to be used from an external server, the device is able to authenticate, through the chosen AP, to the second network.

The server thus forces, dynamically, i.e. notably while the device moves and/or the time evolves, the device to use the identified authentication mechanism.

The invention method is automatic and therefore convenient for the device user.

Such an invention method does not need to involve a device user and may be thus transparent to the device user.

Contrary to the herein above described known solution, the invention method allows authenticating to the second network while being under control of the server addressed through the first network.

According to an additional aspect, the invention is a device for authenticating to a short range radio-frequency communication network, said second network. The second network includes at least one access point.

According to the invention, the device comprises means for connecting to a long range radio-frequency communication network, said first network. The device comprises or is connected to means for storing at least one authentication process relating to the second network. The device is adapted to receive a first message comprising at least one identifier relating to a predetermined authentication process relating to the second network. The device is adapted to select, based upon the at least one identifier relating to a predetermined authentication process relating to the second network, one authentication process relating to the second network. And the device is adapted to send a second message including a request for launching an authentication procedure by using the selected authentication process relating to the second network.

As device, it may include a user terminal or a secure element that is equipped with and/or accesses at least two RF interfaces, one LR RF interface for communicating with the first network and another SR RF interface for communicating with the second network.

According to still an additional aspect, the invention is a server for authenticating a device to a short range radio-frequency communication network, said second network.

According to the invention, the server comprises means for connecting to a long range radio-frequency communication network, said first network. The server is adapted to send a first message comprising at least one identifier relating to a predetermined authentication process relating to the second network.

### Brief description of the drawings:

Additional features and advantages of the invention will be more clearly understandable after reading a detailed description of one preferred embodiment of the invention, given as one indicative and non-limitative example, in conjunction with the following drawings:

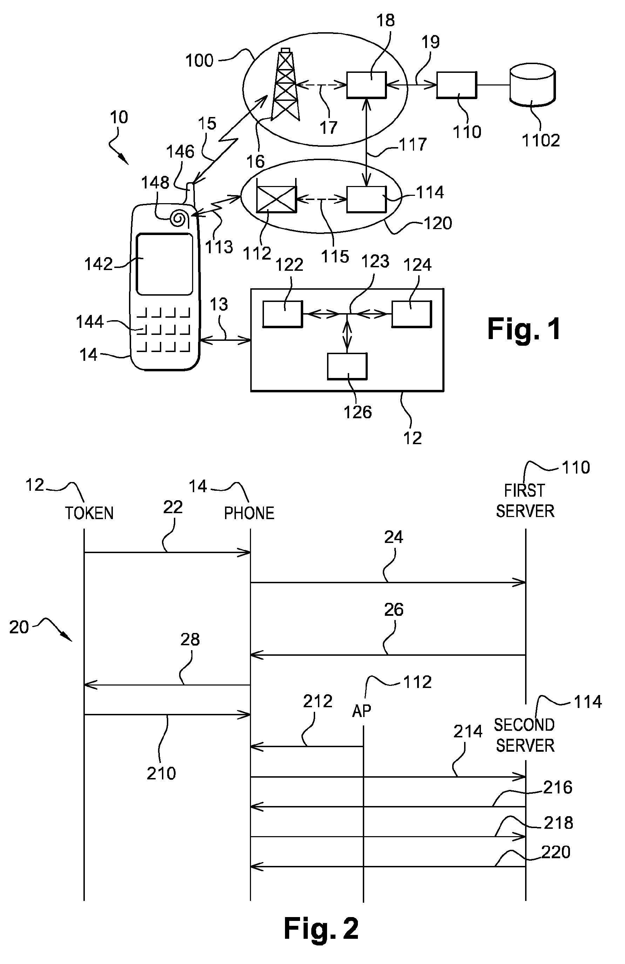

- Figure 1 illustrates a simplified diagram of one exemplary embodiment of a system for authenticating to an SR RF network including a mobile equipment assembly, a first server accessible through an LR RF network, a wireless AP and a second server both accessible through the SR RF network, the system being adapted to provision the mobile equipment assembly from the first server with an identifier relating to an authentication mechanism to be used for connecting to the SR RF network, according to the invention; and
- Figure 2 represents an example of a flow of messages exchanged between the different entities of the system of figure 1, in which the first server pushes, dynamically, an authentication mechanism identifier to the mobile equipment assembly to force this latter to use the identified authentication process to access, through the wireless AP, the second server.

### Detailed description:

Herein under is considered a mobile equipment assembly comprising a mobile phone, as token hosting device, and a Subscriber Identity Module (or SIM) type card, as token and device for authenticating to an SR RF network.

Within the present description, a token is a smart electronic object that is intended to communicate with the outside world.

The token may have different form factors including at least one chip.

Instead of being constituted by a smart card, the token may be, for instance, constituted by an embedded Secure Element (or eSE), as chip soldered, possibly in a removable manner, onto a Printed Circuit Board (or PCB) of a terminal equipment, as token hosting device, or a dongle of the Universal Serial Bus (or USB) type.

Likewise, the adjective "wireless" used within the expression "wireless AP" denotes that the AP communicates, over one or several RF links, with an external device(s) that do(es) not belong to the SR RF network.

Naturally, the herein below described embodiment is only for exemplifying purposes and is not considered to reduce the scope of the present invention.

**Figure 1** shows schematically a system 10 for authenticating to an SR RF communication network.

The system 10 includes a SIM type card 12, a mobile telephone 14, a Base Transceiver Station type entity 16, a Home Location Register type entity 18, an Over-The-Air server 110, an AP 112 and a Remote Authentication Dial In User Service type server (or RADIUS) 114.

For the sake of clarity and conciseness, the SIM type card 12, the mobile telephone 14, the Base Transceiver Station type entity 16, the Home Location Register type entity 18, the Over-The-Air server 110 and the RADIUS type server 116 are termed hereinafter the token 12, the phone 14, the BTS 16, the HLR 18, the first server 110 and the second server 114 respectively.

Likewise, a first data communication network 100 and a second data communication network 120 are termed hereinafter a first network 100 and a second network 120 respectively.

The first network(s) 100 is(are) constituted by a mobile radio-communication network(s), like a Global Service for Mobiles (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a (Wideband) Code Division Multiple Access (or (W-)CDMA), a Long Term Evolution (or LTE) type network(s), a Third Generation Partnership Project (or 3GPP) and/or a fourth Generation (or 4G) radio-communication type technology(ies).

Such a mobile radio-communication network list is not exhaustive but only for exemplifying purposes.

The first network(s) 100 use(s) a Long Range Radio-Frequency (or LR RF) type link(s) 15 to exchange, in a bi-directional manner, with an external wireless communication device(s), like the phone 14.

The LR RF(s) may be fixed at several hundreds of MHz, for instance, around 850, 900, 1800, 1900 and/or 2100 MHz.

The first network 100, as home network, includes one or several BTS 16 and one HLR 18.

The first server 110 is preferably connected to the first network 100 and is thus accessible from the first network 100.

Alternately, instead of being connected to the first network 100, the first server 110 is included within the first network 100.

The second network(s) 120 is(are) constituted by a Short Range Radio-Frequency (or SR RF) network(s), like a WLAN (acronym for "Wireless Local Area Network"), a Bluetooth, a Wifi, a Metropolitan Area Network (or MAN), a Worldwide Interoperability for Microwave Access (or WiMax) and/or a Wireless BROadband (or WIBRO) radio-communication type technology(ies).

Such an SR RF network list is not exhaustive but only for exemplifying purposes.

The second network 120 may be based on Institute of Electrical and Electronics Engineers (or IEEE) 802.1x architecture.

The second network(s) 120 use(s) an SR RF type link(s) 113 to exchange, in a bi-directional manner, with an external wireless communication device(s), like an SR RF enabled phone 14.

The SR RF(s) may be fixed from around 2,4 GHz to around 10 GHz (for Ultra Wide Band (or UWB), e.g. IEEE 802.15.4a), at 2,4-2,5 GHz with a range of about 10 m to 100 m (for Zigbee (e.g. IEEE 802.15.4), Wifi and Bluetooth or Bluetooth low energy (IEEE 802.15.1)) and/or other frequency value(s) allowing to communicate at an SR distance (typically from about 20 cm to 800 m).

The second network 120 includes several APs including at least one local AP 112, like a Wi-fi hotspot, and the second server 114.

Only one local or surrounding AP 112 is represented. However, a plurality of local APs may, each, cover, through an associated SR RF link, one or several wireless communicating devices, like the SR RF enabled phone 14.

The AP 112 is present at a place which is close to a place where the phone 14 is located. When the phone 14 is sufficiently close to the AP 112, the phone 14 is able to detect (when activated) a local presence of the AP 112.

Only one phone 14, as mobile terminal equipment, is represented for clarity reason. The phone 14 is preferably able to interact with the token 12, so as to authenticate, in particular, to the SR RF and second network 120.

However, the first server 110 is able to provide dynamically a fleet of tokens and/or user terminals, as client devices and devices for authenticating to an SR RF network, with an identifier(s) relating to one (or several) authentication process(es). The authentication process identifier(s) constitute(s) data allowing each addressed device to select, amongst one or several authentication processes accessible to the device, the concerned identified authentication process.

Alternately, instead of being coupled to the token 12, the phone 14 stores, within its own memory (not represented), data stored within the token 12 as described infra.

The token 12, as client device and device for authenticating to an SR RF network, is preferably associated with or tied to the first server 110.

The token 12 belongs to a user. The token 12 user is preferably a subscriber to a wireless service(s).

The token 12 includes a chip (not represented).

The token chip includes one (or several) microprocessor(s) 122, as data processing means, one (or several) memory(ies) 124, as data storing means, and one (or several) Input/Output (or I/O) interface(s) 126 that are internally all connected, through an internal bidirectional data bus 123, to each other.

The token I/O interface(s) 126 allow(s) communicating data from the internal chip components to the chip exterior and conversely.

The token microprocessor(s) 122 processe(s), control(s) and communicate(s) internally data with all the other components incorporated within the chip and, through the I/O interface(s) 126, with the chip exterior.

The (or each) token microprocessor 122 executes one or several applications.

The token microprocessor 122 executes, in a preferred manner, one or several security applications.

The security applications include preferably a user authentication process to be used prior to accessing the token memory 124. To authenticate the user, the user has to provide a PIN, biometric data and/or the like, as user reference and authentication data that is securely stored within the token memory 124.

The security applications include preferentially an encryption/decryption process to be used prior to sending data to outside/after receiving data from outside, so as to protect access to data managed by or through the token 12. To encrypt data to be sent, the token 12 uses an encryption key and an encryption algorithm that are both stored within the token memory 124. To decrypt data to be received, the token 12 may use a decryption key and a decryption algorithm that are both stored within the token memory 124.

The token microprocessor 122 is preferably able to initiate actions, in order to interact directly with the outside world, in an independent manner of the token hosting device. Such a capacity of interaction at the initiative of the token 12 is also known as proactive capacity. The token 12 plays thus a role of a master while the token hosting device plays a role of a slave.

The token 12 is thus able to send, at its own initiative, through the phone 14, to any device connected to the phone 14, a proactive command for sending, for instance, to the first server 110 data for triggering a loading of an authentication mechanism identifier and/or a request for accessing a second network 120 or getting an authentication process identifier, so as to access a local SR RF network. Such a request may be accompanied with data.

As data for triggering a loading of an authentication mechanism identifier, it may be information relating to one or several identifiers of surrounding APs, information relating to a location of the token 12, information relating to a local environment and/or other information item that may be related to the token user or else. The information item(s) may have been previously retrieved from the phone 14 and/or the token memory 124. The token location information may be more or less precise. For instance, the token location information may be LOCation Information (or LOCI), an identifier of a cell served by the BTS 16, a Global Positioning System (or GPS) type location and/or the like.

The token memory 124 stores, preferably within either an applet object or one or several Elementary Files (or EF), data relating to one or several wireless services.

Data relating to one or several wireless services includes preferably:
- a first International Mobile Subscriber Identity 1 (or IMSI1), as subscriber and service subscription identifier for accessing at least the first network 100, as first credentials;
- a first key Ki1, as network authentication key, allowing to authenticate the concerned subscriber to at least the first network 100, as first credentials;
- Milenage or the like, as authentication algorithm, allowing to authenticate the concerned subscriber to at least the first network 100.

Data relating to one or several wireless services includes data for accessing a second network 120, like amongst over data, one or several identifiers.

According to an invention feature, the token 12 stores one or several identifiers relating to an authentication processes relating to the second network 120. Each authentication process identifier relates individually to a particular predetermined authentication process relating to the second network 120.

The authentication process identifier may be related to an EAP type, a Wired Equivalent Privacy (or WEP) type, a Wi-fi Protected Access (or WPA) type authentication mechanism and/or (an)other type authentication mechanism(s) that uses a passphrase, as credentials, for being authenticated to the second network 120.

The EAP type authentication mechanism may be an EAP-SIM authentication mechanism that allows re-using the first credentials IMSI1/Ki1 that are stored within the token memory 124 and used for accessing the first network 100.

The EAP-SIM is described in Request For Comments (or RFC) 4186.

The EAP type authentication mechanism may be, among others, an EAP-Authentication and Key Agreement (or AKA), an EAP-Transport Layer Security (or TLS) or the like.

The EAP-AKA is defined in RFC 4187.

The EAP-TLS is defined in RFC 5216.

Such an invention embodiment, i.e. storing the authentication process identifiers within the token 12, allows being valid and preferably secure, regardless of the type or nature of the token hosting device. Such an authentication process identifier storing allows referring to a specific authentication process identifier when addressing the token 12, so as to interact with the token 12. When an external entity refers to a specific authentication process identifier, the token 12 is able to select, based upon the authentication process identifier, one corresponding authentication process relating to the second network 120. The first server 110 (or any other external entity) is thus able to refer to a corresponding authentication process or mechanism to be used for accessing a second network 120. The authentication process to be selected is shared between the token 12, as client device, and at least one second network 120 entity, namely the second server 114.

Alternately, instead of being stored within the token 12, the phone 14, as token hosting device or stand-alone entity, stores one or several authentication process identifiers.

The token 12 stores preferably, for each predetermined authentication process relating to the second network 120, an associated identifier relating to the authentication process.

The token 12 stores preferably one (or several) surrounding AP identifier(s) that may be selected. The surrounding AP identifier(s) may have been loaded from the concerned surrounding AP(s).

The token 12 is configured or adapted to select, based on a received authentication process identifier, a corresponding predetermined authentication process relating to the second network 120.

The token 12 is configured to send to one (or several) selected AP(s) a message including a request for launching an authentication procedure by using the selected authentication process relating to the second network 120.

The token 12 is configured to use a received identified authentication process, so as to connect or attach to the second network 120. The second network 120 also uses the identified authentication process, so as to authenticate an access requesting device, like the token hosting device and/or the token 12.

The token 12 may thus modify, based upon the first server 110 command or order, an authentication process to be selected with respect notably to a previously selected authentication process, so as to connect to the second network 120.

The token 12 that may be on the move is thus dynamically configurable to force the use of the identified authentication process. For instance, when roaming, i.e. when the token 12 leaves its home network or in a place where the token user is likely to be close to or within a building or a house, the first server 110 is able to push an identifier relating to the authentication process to be selected within the token 12. The mobile equipment assembly user is thus able, once authenticated to the second network 120, to get connected to at least one second network 120.

There is no need of any token user involvement to force the use of the identified authentication process.

The authentication process to be selected may therefore be decided at the first server 110 that shares a common authentication process identifier to be referred.

Advantageously, the first server 110 pushes, at the same time, besides an identifier relating to the authentication process to be selected, a locally accessible AP to be selected, while referring to a surrounding AP identifier, like a particular Service Set IDentification (or SSID) or a particular AP address.

The first server 110 manages, besides the authentication process to be used, the AP to be selected from the token 12 according to the token location, a first network event and/or other predetermined data for triggering an authentication to the second network 120.

There is no need of any token user involvement to force the use of the identified surrounding AP.

Thus, an authentication process identifier is associated with one (or several) identifier(s) relating to one (or several) AP(s) that is(are) locally accessible. Besides authentication process identifiers, there is (or are) further one or several identifiers relating to one or several APs that is (or are) associated with each authentication process identifier.

The token memory 124 stores preferably data for triggering a loading of an authentication process identifier, like LOCI and/or other data relating to a location where the token 12 is present.

As known per se, the LOCI identifies a Location Area (or LA) within a first network 100. The LA is comprised within one radio cell of the first network 100. The LA is uniquely identified within the first network 100 by its Location Area Code (or LAC). The token 12 is thus able to provide the first server 110 with the current token location. When the token 12 roams into an LA that is different from a previous visited LA, the token memory 124 stores an updated LOCI including the current LA.

The token memory 124 stores preferably data relating to a Uniform Resource Identifier (or URI), a Uniform Resource Locator (or URL) and/or an Internet Protocol (or IP) address of the first server 110, as identifier of the server to be addressed.

The token memory 124 stores preferably a Personal Identity Number (or PIN), as user authentication data, and/or one or several cryptographic algorithm(s), as data relating to a secret(s) that is securely stored within the token 12.

The token memory 124 stores preferably one or several SIM type applications.

The SIM type application(s) includes, among others, a SIM application for a Global Service for Mobiles (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the token hosting device, like the phone 14, to authenticate to the first network(s) 100 by using the first credentials IMSI1/Ki1.

The token memory 124 stores preferably a first server 110 identifier and a second server 114 identifier.

According to the invention, the token memory 124 stores one agent, as application for accessing a second network(s) 120, that uses, among several stored authentication processes, one particular authentication process that is selected thanks to a received authentication process identifier.

Instead of being supported by the token 12, the application for accessing a second network(s) 120 is supported by the phone 14.

A triggering of an execution of the agent occurs further to a reception of one message that comprises one (or several) identifier(s) relating to a predetermined authentication process relating to the second network 120, an AP identifier(s) and/or any other parameter(s) allowing to exchange with an AP relating to a second network(s) 120. The AP identifier(s) may have been either received from the first server 110 or captured, possibly through the phone 14, by the token 12.

Alternatively, instead of being captured by the token 12, the phone 14 captures one (or several) identifier(s) relating to an AP(s) that broadcast(s) data for launching a connection to a second network 120, at the initiative of a requesting device.

As to other data stored within the token memory 124, there may be a pseudo of the subscriber, as identifier that is allocated to the token 12 or the token hosting device, so as to exchange with the AP 114 of the second network 120.

An AP 114 identifier may not be registered within the concerned token memory 124 prior to its provision by the first server 110.

An agent execution by the token 12 further allows sending to the token hosting device a request for launching an authentication procedure by using the received identified authentication process relating to the second network 120.

Alternately, when the token 12 is a stand-alone entity (i.e. without cooperating with any token hosting device), the token 12 sends directly to a selected identified AP a request for launching an authentication procedure by using the selected authentication process relating to the second network 120.

The token 12 implements, for instance, notably ETSI TS 102.310.

The token 12 is connected, through a bi-directional contact link 13, to the phone 14.

Instead of a phone, it may be any other device including means for processing data, comprising or being connected to at least one I/O interface with a token, comprising or being connected to at least two wireless I/O interfaces (at least one LF RF interface and at least one SR RF interface), as communication means for exchanging data with outside, and comprising or being connected to means for storing data.

Instead of being constituted by a phone, the token hosting device may be, for instance, a laptop computer, a Personal Computer (or PC), a tablet computer, a media-player, a game console, a netbook, a handset, a Personal Digital Assistance (or PDA), any other portable device or other device that accesses at least two RF interfaces, one RF interface for exchanging with a LR RF network, as first network, and another RF interface for exchanging with an SR RF network, as second network.

Such a token hosting device list is not exhaustive but only for exemplifying purposes.

According to another embodiment, the token 12 is coupled, through a bi-directional contact-less link, to the phone 14.

The phone I/O interface with the token 12 may be an International Organization for Standardization (or ISO) 7816 interface, as contact interface when the token 12 is inserted within the phone 14.

Instead of a contact interface, the phone I/O interface with the token 12 includes or is connected to a contact-less interface. The phone 14 thus includes or is connected to means for communicating data while using preferably an SR RF link.

The phone 14 is used for accessing one or several first networks 100.

The phone 14 includes preferably a display screen 142 and a keyboard 144, as Man Machine Interface (or MMI).

The MMI allows a phone user to interact with the phone 14 and preferably the token 12.

The phone 14 comprises a first antenna 146. The first antenna 146 allows communicating data, through a LR RF link(s) 15, over one or several first networks 100, with the first server 110.

The phone 14 comprises a second antenna 148. The second antenna 148 allows communicating data, via a SR RF link(s) 113, through a locally accessible AP 112, with a second server 114. The second server 114 is included within or connected to the second network 120.

The phone 14 includes data processing means, such as one or several microprocessor(s) (not represented), data storing means (not represented), like phone memory(ies), and at least three I/O interfaces (not represented).

The phone memory stores an identifier relating to the phone 14, like an International Mobile Equipment Identity (or IMEI).

The phone 14 plays, in a preferential manner, a role of a modulator-demodulator (or modem), so as to exchange data, through the first network 100, notably between the token 12 and the first server 110.

Likewise, the phone 14 plays, in a preferential manner, a role of a modulator-demodulator (or modem), so as to exchange data, through the second network 120, between either the phone 14 or the token 12 and the second server 114.

The phone 14 carries out preferably the following operations:
- a modulation of an analogical carrier signal to encode digital information to be transmitted, over the second antenna 148, through the AP 114, to the second server 114, and
- a demodulation of a received analogical carrier signal to decode the encoded digital information that is received, over the second antenna 148, through the AP 114, from the second server 114.

The phone 14 is firstly under a first network radio coverage.

The phone 14 is connected, through a LR RF link 15, to the BTS 16, as intermediary first network 100 entity notably between the phone 14 and the first server 110.

The phone 14 is preferably able to detect each locally accessible AP under a radio coverage of which the phone 14 is situated.

The BTS 16 is able to provide, as intermediary network entity, the first network 100 and the first server 110 with information relating to the phone 14 and/or the token 12.

As information, it may include, besides the IMSI, as first network subscription identifier, information relating to a phone address, like a Mobile Subscriber Integrated Services Digital network Number (or MSISDN), information relating to a location of the phone 14, like an identifier relating to a cell or a geographical location, information relating to a Quality of Service (or QoS) of one or several signals received by the BTS 16 from the phone 14 and/or other information originating from the phone 14 or the token 12.

The cell, as area of a first network radio coverage, may be typically from around 100 m² to around 10 km².

The BTS 16 is able to provide, as intermediary device, the token 12 and/or the phone 14 with information originating from the first server 110.

The BTS 16 is connected, through several first network entities (not represented), via cables 17 (represented with a dotted line), to the HLR 18.

The HLR 18 accesses a first server 110 that authenticates a subscriber to the first network 100.

The HLR 18 also accesses preferably a second server 114 that authenticates a client device to the second network 120.

The HLR 18 accesses information relating to the first network 100 subscribers, as authorized users, that includes the subscribers IMSI and the associated network authentication keys Ki among which there is the token 12 credentials, as first credentials IMSI1/Ki1.

The HLR 18 is able to track a location where the phone 14 is present. The HLR 18 may provide the first server 110 with location information.

The HLR 18 includes a central database (not represented), like an AUthentication Center (or AUC). The central database stores securely, i.e. in an encrypted manner, data, like the network authentication keys and credentials, that allow authenticating the concerned subscriber to the first network 100. Amongst the network authentication keys, there is the network authentication key Ki1 relating to a subscriber IMSI1 that are both stored within the token 12 which is authorized to access the first network 100.

The central database is used as a reference database for other network entity, such as a Visitor Location Register (or VLR) (not represented).

The HLR 18 may be able to address the VLR, so as to let this latter register location information relating to the second network 120 and originating from the second server 114.

When provided with the IMSI1, the HLR 18 is able to retrieve a corresponding MSISDN, as data associated with the IMSI1, as first network subscription identifier.

The HLR 18 may add a retrieved MSISDN to any message originating, through the BTS 16, from the token 12 and/or the phone 14.

The HLR 18 is able to forward any message including a MSISDN relating to the phone 14 and possibly a corresponding IMSI1 originating from the token 12 and/or the phone 14 to the first server 110.

The HLR 18 receives preferably from the phone 14, through intermediary first network entities, the IMSI1 and/or the MSISDN within a Signalling System 7 (or SS7) message, as signalling layer of the GSM type first network 100.

The HLR 18 is able to forward a message originating from the first server 110 to the token 12 and/or the phone 14.

The HLR 18 is connected, through a cable 19, to the first server 110.

The first server 110 is identified by a URI, like an URL, or an IP address, as first server identifier. The first server identifier may be stored within the token memory 124 and/or a phone memory.

The first server 110 is hosted by a computer.

The first server 110 includes data processing means, such as one or several microprocessor(s) (not represented), data storing means 1102, as server memory, and one (ore several) I/O interface(s) (not represented).

The server I/O interface(s) is connected to the first network 100 and allows communicating with the first network 100 and any device connected to the first network 100.

The first server 110 is preferably associated with or tied to the token 12.

Alternately, the first server 110 is associated with or tied to the phone 14.

The first server 110 (or a first network entity) is able to detect any device, like the phone 14, that is present under a radio coverage of the first network 100, based upon triggering information. The triggering information originates from the HLR 18, the phone 14, as connection requesting device, and/or the token 12.

As triggering information, it may be:
- information relating to a location of a connection requesting device, like a LOCI, a cell identifier "Cell-ID" or a geographical location;
- information relating to a surrounding AP(s), like an identifier relating to each locally accessible AP; and/or
- information relating to a QoS of one or several signals received from the connection requesting device by a BTS 16 involved within a communication between a connection requesting device and the first server 110.

The first server 110 may be operated by a first network operator, as MNO or MVNO, a service provider or on its behalf.

The first server 110 manages access to a second network 120 and notably an authentication process to be used for accessing the second server 114.

The first server 110 is preferably arranged to provide a client device, like the token 12, with a second server 114 identifier.

The first server 110 is connected to or includes a memory 1102 that stores a database.

The database is under control of the first server 110.

The database stores preferably a set of identifiers relating to authentication processes to be used for accessing the second network 120 that are, each, associated with specific triggering information.

The first server 110 thus accesses one or several authentication process identifiers allowing a client device(s) to access the second network 120.

The database includes preferably rules for accessing the second network 120 that satisfy information, as required criterion(s), like a criterion(s) relating to a client device location, a subscriber segment and/or a client device roaming. The information may be received from a client device, like the token 12 or the phone 14.

The database includes preferably information, like an identifier(s) relating to each AP of the second network 120, that is associated with one or several identifiers relating to an authentication processes to be used for authenticating to the second network 120.

The database may include further information.

As information, it may include one or several pieces of the following information:
- one or several predetermined dates and/or times;
- a user profile(s) that is(are) eligible for accessing the second network 120, such as a predetermined minimum age and/or other kind of access condition(s), a user authentication;
- one or several predetermined minimum threshold values of QoS and/or other radio parameter(s). The QoS may be characterized by a power of a signal(s) received from the phone 14 by the BTS 16;
- one or several predetermined logical channels. The logical channel(s) may comprise one voice communication channel and/or one or several data communication channels. As data communication channels, it may include an Internet Protocol (or IP) type channel, a GPRS type channel and/or any other channel the bit rate of which is higher than the one related to a voice communication channel;
- one or several identified geographic locations of the concerned subscriber; and/or
- one or several identified cells, like Cell-IDentifier (or Cell-ID), under a radio coverage of the first network(s) 110 and in which the concerned subscriber is situated.

The first server 110 takes preferably into account rules for accessing the second network 120.

The first server 110 authorizes access to data stored at the second network 120 side and/or data accessible through the second network 120 by providing, when authorized, a client device with one or several authentication process identifiers.

The first server 110, as addressee of a request or the like, is arranged to provision the token 12 and/or the phone 14, as client device, with data and notably an identifier relating to an authentication process to be selected by the client device. Such an authentication process identifier allows the client device to authenticate to the second network 120 and thus to get connected to the second network 120.

The first server 110 is arranged to retrieve, further to a query to the database, an identifier relating to a locally accessible AP 112 that is associated with information that is preferably received from the HLR 18, the token 12 and/or the phone 14.

The first server 110 is preferably able to encrypt/decrypt data to be exchanged with the token 12 and/or the phone 14, as first server interlocutor, by using an encryption/decryption key(s) shared with the first server interlocutor.

The first server 110 is preferably connected, through the HLR 18, to the second server 114.

Alternately, the first server 110 is connected directly (not represented), i.e. without passing through a first network entity, like the HLR 18, via an intermediary network, like an Internet type network, to the second server 114.

As to the AP 112, it may be located within a home of an individual or premises of an enterprise or another public area.

The AP 112 may be portable and therefore movable.

The AP 112 may consist of a mere intermediary communication entity relaying information between the phone 14, as connection requesting device, and the second server 114.

The AP 112 is accessible through a predefined SR RF.

The AP 112 may also be termed hotspot when the SR RF link relates to a Bluetooth type technology.

The AP 112 is connected, through a bi-directional wireless link 113, to a client device, like the phone 14.

The AP 112 has an AP identifier, like a Media Access Control (or MAC) address for Bluetooth or Service Set IDentification (or SSID) for Wifi.

The AP 112 may be any device including one (or several) microprocessor(s), as data processing means (not represented), comprising or being connected to one (or several) SR RF I/O interface(s) for exchanging, over an SR RF antenna, data with outside, comprising one (or several) memory(ies), as data storing means (not represented), and comprising one I/O interface with a second network, like Internet.

The AP 112 is connected, through a bi-directional wire link 115, to the second server 114.

The AP memory may store user data, like a User IDentifier and/or a user password, as second credentials, that allow identifying and authenticating a user of the AP 112.

The AP microprocessor processes data originating from the AP memory and, through the AP I/O interfaces, external entities, like the phone 14 and the second server 114.

The AP microprocessor executes preferably a security function(s), in order to protect access to user information managed through or by the AP.

The security functions may include an encryption/decryption process to be used prior to sending to/after receiving from the phone 14 data, so as to protect access to data thus exchanged between the AP 112 and the phone 14.

The security functions may include an encryption/decryption process to be used before sending to/after receiving from the second server 114 data, so as to protect access to data thus exchanged between the AP 112 and the second server 114.

The AP 112 that is locally accessible to the phone 14, as a connection requesting device, is connected to, possibly besides a plurality of APs, the second server 114.

The second server 114 is hosted by a computer.

The second server 114 is identified by a URI, like an URL, or an IP address, as second server identifier.

The second server 114 is preferably able to encrypt/decrypt data to be exchanged with the client device by using an encryption/decryption key(s) shared with the client device.

The second server 114 is preferably connected, through a wire 117, to the HLR 18.

The second server 114 is thus able to access the central database that stores data, like the second network authentication keys and credentials, that allow authenticating a connection requesting device, like the phone 14, to the second network 120. The second server 114 is able to authenticate (or not) a subscriber to the second network 120. The second server 114 may thus use the first network authentication key Ki1, as second network authentication key, to authenticate to the second network 120.

**Figure 2** depicts an example of a message flow 20 that involves notably the token 12, the phone 14, the first server 110, the AP 112 and the second server 114.

The invention method may be triggered in different ways, at the phone 14 boot, at an SR RF I/O interface power on, upon data received from the token 12, upon data received from the first server 110, or any other triggering event.

It is assumed that the token 12 constitutes a second network connection requesting device.

It is assumed that the phone 14 is attached to the first network 100 and that the mobile equipment assembly (comprising the phone 14 and the token 12) is authenticated to the first network 100.

It is also assumed that the phone 14 user has activated an SR RF I/O interface. Thus, the SR RF I/O interface of the phone 14 is powered on and the phone 14 that supports a supplicant, as application. The supplicant is running and enables to access, over a locally accessible AP, the second network 120.

The phone 14 and the token 12 may use Application Protocol Data Unit. The phone 14 and the token 12 may use any other communication protocol, so as to exchange data.

It is assumed that the token 12 stores data relating to wireless services managed by the second server 114. As wireless service data, there is data relating to several predetermined EAP type authentication mechanisms, as authentication processes, that are, each, associated with one authentication process identifier.

Optionally, the token 12 sends to the phone 14 a message 22 including a request for addressing the first server 110 accompanied with LOCI, as information relating to a location where the token 12 is present and triggering information.

Optionally, the phone 14 adds further triggering information, like an identifier relating to each locally detected AP possibly associated with one (or several) identifier(s) relating to one (or several) detected authentication process(es). To add such triggering information, the phone 14 detects previously one (or several) identified surrounding APs and possibly one (or several) identified authentication process(es) associated with each detected surrounding AP.

The phone 14 sends, on its own initiative or on behalf of the token 12, to the first server 110 a message 24 including triggering information and the subscriber identifier.

The triggering information includes preferably the triggering information that is received from the token 12.

The phone 14 and the first server 110 may use a Short Message Service (or SMS) type technology, an HyperText Transfer Protocol (or http) type technology and/or any other communication protocol, so as to exchange data.

Optionally, the BTS 16 or any other first network entity (not represented) adds further triggering information, like a cell-ID, a QoS relating to a signal received from the phone 14 and/or any other radio parameter(s).

The first server 110 receives the triggering information originating from the token 12, the phone 14 and/or any first network entity(ies).

Then, the first server 110 retrieves, based on the received triggering information and preferably rules for accessing the second network 120, one identifier relating to a predetermined authentication process relating to the second network 120 that is shared with the identified token 12, as second network connection requesting device.

Alternatively, instead of a single authentication process identifier, the first server 110 retrieves a plurality of identifiers relating to predetermined authentication processes relating to the second network 120. Optionally, the predetermined authentication process identifiers are classified within an ordered priority list.

The first server 110 may further retrieve, based on the received triggering information and preferably rules for accessing the second network 120, one identifier relating to an AP that is associated with the authentication process identifier that is also provided. If the first server 110 retrieves several authentication process identifiers, then the first server 110 retrieves one (or several) AP identifier(s) that is(are) associated with each authentication process identifier. If there are several AP identifiers per a given authentication process identifier, then the AP identifiers may be classified within an ordered priority list.

Then, the first server 110 sends to the phone 14 a message 26 including a request for writing, into the token 12, data accompanied with the identifier relating to the predetermined authentication process relating to the second network 120, as data to be written into the token 12.

The request for writing, into the token 12, data included within the last message 26 may be further accompanied with the identifier relating to the AP to be selected and to be associated with the identifier relating to the predetermined authentication process relating to the second network 120.

The phone 14 sends to the token 12 a message 28 including the identifier relating to the predetermined authentication process relating to the second network 120 that is possibly associated with the identifier relating to the surrounding AP to be selected.

The token 12 updates its memory 124 while saving the received identifier(s) relating to the predetermined authentication process(es) relating to the second network 120. At least one corresponding authentication process is to be used for authenticating to the second network 120.

Optionally, the token 12 sends, through the phone 14, to the first server 110 an acknowledgement relating to a reception of the message 28 including the authentication process identifier and possibly an associated AP identifier.

Then, the token 12 selects preferably, based on the received identifier(s) relating to the predetermined authentication process(es) relating to the second network 120, one authentication process relating to the second network 120.

The token 12 picks out, among one or several stored identified predetermined authentication processes relating to the second network 120, the one(s) that is(are) identified by the first server 110. If there are several authentication process identifiers, then the token 12 may select, on its own, only one authentication process identifier based on a predetermined criterion(s), like a QoS relating to a signal received by the phone 14 and/or other radio parameter(s).

The token 12 may send to the phone 14 a request (not represented), like "Refresh Steering of roaming for iWLAN", for reading information (or parameter(s)) for connecting to a second network 120 which includes the lastly received authentication process identifier(s) and, possibly, an AP identifier(s). Then, the phone 14 sends back to the token 12 a request for reading the updated information.

The token 12 sends preferably to the phone 14 a message 210 including either the identifier(s) relating to the predetermined authentication process(es) relating to the second network 120 or the identifier relating to the predetermined authentication process relating to the second network 120 that is selected by the token 12.

The message 210 may further include an associated AP identifier(s).

The phone 14 stores the received information for connecting to a second network 120, e.g. the Wifi settings, by replacing any corresponding information for connecting to a second network.

The AP 112 is present in a place where the phone 14 is located.

The AP 112 broadcasts 212 its own AP identifier.

The phone 14 may select the AP 112 based on an identifier(s) relating to the AP(s) received, through the token 12, from the first server 110.

The phone 14 may select, based on an identifier(s) relating to the predetermined authentication process(es) relating to the second network 120 that is(are) received, through the token 12, from the first server 110, one authentication process relating to the second network 120.

Alternately, the phone 14 uses, based on an identifier(s) relating to the predetermined authentication process(es) relating to the second network 120 that is(are) received, through the token 12, from the first server 110, one authentication process relating to the second network 120 that is selected by the token 12.

The phone 14 sends, through the AP 112, as a selected AP, to the second server 114 a message 214 including a request for launching an authentication procedure by using the selected authentication process relating to the second network 120.

The selected authentication process relating to the second network 120 allows the phone 14 to authenticate to the second network 120.

The second server 114 sends, through the AP 112, to the phone 14 a message 216 including a challenge to be used by its interlocutor for being authenticated, so as to access the second network 120.

Then, the phone 14 forwards (not represented) to the token 12 the challenge to be used by its interlocutor for being authenticated.

The token 12 implements the selected authentication process relating to the second network 120. The token 12 uses the received challenge and a predetermined authentication key, as inputs to a predetermined authentication algorithm, so as to determine a corresponding result. The token 12 thus generates a corresponding result, as output.

The token 12 sends to the phone 14, as intermediary entity, the result (not represented) to be used for being authenticated to the second network 120.

The phone 14 sends, through the AP 112, as intermediary entity, to the second server 114 a message 218 including the result, as challenge response.

The second server 114, as authentication server, verifies whether the result matches data for authenticating to the second network 120 by using the identified authentication process and a corresponding predetermined authentication key and the challenge.

If the result does not match data for authenticating to the second network 120, then the second server 114 does not authenticate its interlocutor and forbids the phone 14 to access the second network 120 by sending, through the AP 112, to the phone 14 a message 220 including a message concerning a failure to comply with the authentication process.

Otherwise, i.e. if the result matches data for authenticating to the second network 120, then the second server 114 authenticates its interlocutor and authorizes the phone 14 to access the second network 120 by sending, through the AP 112, to the phone 14 a message 220 including a message concerning a successful authentication.

Such a process for authenticating the token 12/phone 14 to the second network 120 is transparent to the user since she/he has no credentials to give. This authentication method is automatic, easy and convenient for the user.

An authentication to the second network 120 allows accessing dynamically the second network 120 with a seamless user experience.

Such an authentication to the second network 120 allows accessing and offloading the first network 100. Furthermore, an access to the second network 120 allows increasing a data rate. For instance, a 3G type network, as first network, has a data rate from about 7 Mbit/s to about 14 Mbit/s while a Wifi type network, as second network, has a data rate from about 54 Mbit/s to about 128 Mbit/s.

A lot of amendments of the embodiment described supra may be brought without departing from the scope of the invention. For example, as another embodiment, instead of the token 12, a user terminal, like the phone 14, as stand-alone entity, constitutes a device for authenticating to a short range radio-frequency network that carries out, besides the functions carried out by the phone 14 as described supra, the functions that are also carried out by the token 12 as described supra.

## Claims

1. A method for authenticating a device to a short range radio-frequency communication network, said second network, the second network including at least one access point,
**characterized in that,** a device being connected to a long range radio-frequency communication network, said first network, the device accessing at least one authentication process relating to the second network, a first server being accessible from the first network, the method comprises the following steps:
- the first server sends to the device a first message (26) comprising at least one identifier relating to a predetermined authentication process relating to the second network;
- the device selects, based upon the at least one identifier relating to a predetermined authentication process relating to the second network, one authentication process relating to the second network; and
- the device sends to at least one selected access point a second message (214) including a request for launching an authentication procedure by using the selected authentication process relating to the second network.

2. Method according to claim 1, wherein, prior to sending the first message to the device, the device detects at least one identified surrounding access point and the device sends to the first server a third message including an identifier relating to each detected surrounding access point.

3. Method according to claim 2, wherein the first message includes, besides at least one identifier relating to a predetermined authentication process relating to the second network, at least one identifier relating to an access point which the device has to connect to.

4. Method according to any of claims 1 to 3, wherein, prior to sending the first message to the device, the device detects at least one identified authentication process associated with each detected surrounding access point and the device sends to the first server a third message including an identifier relating to at least one detected authentication process associated with each detected surrounding access point.

5. Method according to any of claims 1 to 4, wherein prior to sending the first message to the device, the device sends to the first server a message (22) comprising information relating to a location where the device is present.

6. Method according to any of claims 1 to 5, wherein, a token being coupled or connected to the device,
- the device sends to the token a fourth message (28) comprising the at least one identifier relating to a predetermined authentication process relating to the second network; and
- the token sends to the device a fifth message (210) comprising the at least one identifier relating to a predetermined authentication process relating to the second network.

7. Method according to any of claims 1 to 6, wherein a predetermined authentication process relating to the second network includes at least one element of a group comprising:
- an Extensible Authentication Protocol type authentication mechanism;
- a Wired Equivalent Privacy type authentication mechanism; and
- a Wi-fi Protected Access type authentication mechanism.

8. Method according to any of claims 1 to 7, wherein the second network includes a Bluetooth or Wi-fi type network while the first network includes a mobile radio-communication type network.

9. A device (12 or 14) for authenticating to a short range radio-frequency communication network, said second network, the second network including at least one access point,
**characterized in that,** the device comprising means for connecting to a long range radio-frequency communication network, said first network, the device comprising or being connected to means for storing at least one authentication process relating to the second network, the device is adapted:
- to receive a first message (26) comprising at least one identifier relating to a predetermined authentication process relating to the second network;
- to select, based upon the at least one identifier relating to a predetermined authentication process relating to the second network, one authentication process relating to the second network; and
- to send a second message (214) including a request for launching an authentication procedure by using the selected authentication process relating to the second network.

10. A server (110) for authenticating a device to a short range radio-frequency communication network, said second network,
**characterized in that,** the server comprising means for connecting to a long range radio-frequency communication network, said first network, the server is adapted to send a first message (26) comprising at least one identifier relating to a predetermined authentication process relating to the second network.
